# EUROPÄISCHE PATENTANMELDUNG

(11) **EP 1 591 185 A1**
(43) Veröffentlichungstag der Anmeldung: **02.11.2005**
(21) Anmeldenummer: 05008846.7
(22) Anmeldetag: 22.04.2005
(51) Int. Cl.: B23K 3/06, B23K 3/02, B23K 1/08

(54) **Verfahren und Vorrichtung zum Reinigen und zum Beschichten und/oder Befüllen einer Lötspitze durch Tauchen in eine heisse fliessende Lotwelle**

(30) Priorität: 28.04.2004 DE 102004020910; 12.01.2005 DE 102005001378
(71) Anmelder: Hohnerlein, Ernst, D-97892 Kreuzwertheim (DE)
(72) Erfinder: Hohnerlein, Ernst, D-97892 Kreuzwertheim (DE)
(74) Vertreter: Tergau & Pohl Patentanwälte

(57) **Zusammenfassung**

Die Erfindung betrifft ein Verfahren und eine Vorrichtung zum Reinigen und zum Beschichten und /oder Befüllen einer an einem Lötgerät (3) befindlichen Lötspitze (2) mit frischem sowie flüssigem Lot (21).

Der Kern der Erfindung besteht darin, daß die Lötspitze (2) zum Reinigen und zum Beschichten und/oder Befüllen mit frischem, verarbeitbarem Lot (21), in eine heiße, fließende Lotwelle (14) getaucht und zum Löten wieder entnommen wird.

## Beschreibung

Die Erfindung betrifft ein Verfahren und eine Vorrichtung zum Reinigen und zum Beschichten und / oder Befüllen einer an einem Lötgerät befindlichen Lötspitze mit frischem sowie flüssigem Lot und umfaßt die Merkmale in den Oberbegriffen der Patentansprüche 1 und 11.

Grundsätzlich sind zweckmäßige sowie technisch einwandfrei arbeitende und wirklich zufriedenstellende Verfahren und Vorrichtungen sowohl zum Reinigen als auch zum Beschichten von mindestens einer Lötspitze mit frischem, heißem sowie flüssigem Lot nicht bekannt. Es ist vielmehr lediglich üblich, die Lötspitzen 3 von Lötgeräten mit Hilfe eines Lappens oder dergleichen von Hand zu reinigen und sodann im Bereich der Lötspitze Lötdraht zu erhitzen und mit diesem erhitzten Lötdraht Lötarbeiten durchzuführen. Diese Arbeitsweise ist aufwendig, umständlich und in vielen Fällen in hohem Maße unbefriedigend, wobei vor allem auch die Lötqualität zu wünschen übrig läßt. Der Erfindung liegt daher die Aufgabe zugrunde, ein Verfahren und eine Vorrichtung zu schaffen, mit deren Hilfe eine Lötspitze auf einfache und schnelle Weise gereinigt und sodann mit frischem, heißem sowie flüssigem Lot beschichtet bzw. befüllt werden kann.

Zur Lösung dieser Aufgabe sieht die Erfindung vor, daß die an einem Handlötgerät oder an einem Roboter bzw. Handlingsgerät oder dergleichen befindlichen Lötspitze zunächst zum Reinigen in eine heiße, fließende Lötwelle getaucht und sodann mit flüssigem Lot beschichtet und / oder befüllt und sodann zum Löten wieder entnommen wird.

Die Lotwelle spült alle Verunreinigungen, bei denen es sich um oxidierte Rückstände und dergleichen handeln kann, von der Lötspitze weg und benetzt sodann die lötspitze in ausreichendem Maß mit frischem, heißem Lot. Wird die Spitze nach einer kurzen Verweildauer oder auch nach einer beliebig langen Zeit aus der Lötwelle entnommen, so ist sie zur Durchführung von Lötarbelten ausreichend mit Lot versehen. Hochwertige Lötarbeiten lassen sich ferner dann durchführen, wenn die Lötspitze bedarfsgerecht dauernd mit Schutzgas umströmt wird, wobei heißes Schutzgas zum Vorwärmen und kaltes Schutzgas zum Abkühlen der Lötstelle verwendet werden.

Die Vorrichtung zur Durchführung des Verfahrens umfaßt ein im wesentlichen geschlossenes Gehäuse mit einer Gehäuseöffnung, wobei sich in dem Gehäuse ein Lotbad unter einer Schutzgasatmosphäre und eine Lotwelle befinden.

Die Lötspitze läßt sich durch die Gehäuseöffnung zum Reinigen bis in die Lotwelle eintauchen und wird sodann mit Lot versehen wieder zurück bewegt. Dabei kann sie bis zum Erreichen eines Anschlages mittelbar oder unmittelbar geführt werden.

Weitere Merkmale der Erfindung gehen aus Unteransprüchen und der Beschreibung im Zusammenhang mit der Zeichnung hervor.

Die Erfindung wird nachstehend anhand eines Ausführungsbeispieles, das in der Zeichnung dargestellt ist, näher beschrieben. Dabei zeigen:
- Fig. 1:: im Schnitt eine Prinzipsskizze einer Vorrichtung zum Reinigen und zum Beschichten einer Lötspitze mit frischem, heißem sowie flüssigern Lot;
- Fig. 2:: in größerem Maßstab einen Schnitt durch eine Einzelheit des Gehäuses mit einer Lötwelle und einer in diese eintauchenden Lötspitze;
- Fig. 3:: in größerem Maßstab sowie abgeschnitten eine Ansicht einer Lötspitze und einer Lötsteile während der Vorwärmung mit heißem Schutzgas;
- Fig. 4:: eine Ansicht wie in Fig. 3 mit der Lötspitze während der Kontaktierung mit Lot und
- Fig. 5:: eine Ansicht wie in Fig. 4 während einer Abkühlphase mit einem kühlen Schutzgasstrom.

Eine Vorrichtung 1 zum Reinigen bzw. Neutralisieren und zum Beschichten einer Lötspitze 2, die an einem Handlötgerät 3 bzw. an einem Handlingsgerät 3' oder Roboter in grundsätzlich bekannter Weise angeordnet ist, umfaßt ein Gehäuse 4, das aus einem Gehäuseunterteil 5 und einer das Gehäuseunterteil 5 nach oben gasdicht abschließenden Abdeckung 6 zum Beispiel in Form einer Abdeckplatte besteht.

Im Inneren des Gehäuses 4 befinden sich eine Lotwanne 7 mit einer Lotfüllung 8 und ein Heizkörper 9. Ferner ist in der Lotwanne 7 ein Lotkanal 10 angeordnet, der von einer Lotpumpe 11 zu einem Stelgrohr 12 mit einer Öffnung 13 führt, an der eine Lotwelle 14 mit ausreichend hoher Temperatur aufgrund einer durch die Lotpumpe 11 erzeugten Strömung austritt und in das von der Lotfüllung 8 gebildete Lotbad zurückfließt. Als Antrieb für die Lotpumpe 11 ist ein außerhalb des Lotbades 8' angeordneter Pumpenmotor 15 vorgesehen und greift mit seiner Antrlebswelle 16 durch die Abdeckung 6.

Eine Schutzgasatmosphäre 17 befindet sich in dem Raum 18 zwischen der freien Oberfläche 19 des Lotbades 8' und der Lotbad - Abdeckung 6. Durch eine Versorgungsleitung 20 strömt bei Bedarf frisches Schutzgas in den Raum 18.

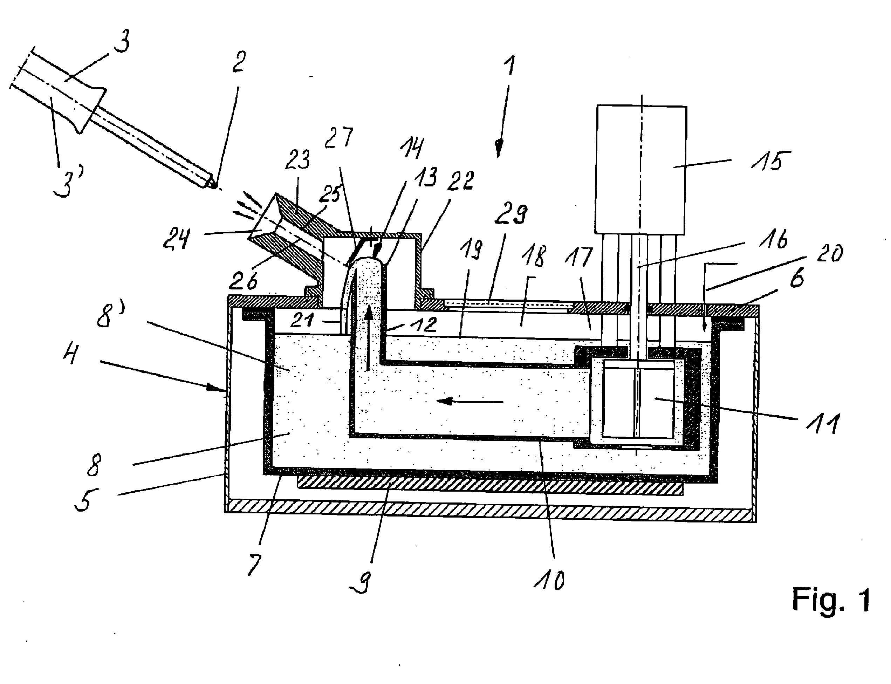

Bei Betrieb der Lotpumpe 11 strömt an der freien Öffnung 13 des Steigrohres 12 permanent heißes, flüssiges Lot 21 in Form der Lötwelle 14 aus und fließt in das Lotbad 8' zurück. Gemäß dem in Fig. 1 dargestellten Ausführungsbeispieles befindet sich die Lötwelle 14 im Inneren einer Haube 22, die über die Abdeckung 6 hochragt.

Zum Reinigen der Lötspitze 2 zum Beispiel von Lötresten und zum Beschichten der Lötspitze 2 mit frischem, verarbeitbarem Lot 21 weist die Vorrichtung 1 bzw. das Gehäuse 4 ein Einführteil 23 derart auf, daß die Lötspitze 2 im Bereich einer zum Reinigen und Beschichten bzw. Befüllen dienenden Zone in die Lötwelle 14 eintauchen und wieder entnommen werden kann. Gemäß Ausführungsbeispiel befindet sich das Einführten 23 an der Haube 22 und umfaßt eine Gehäuseöffnung 24 derart, daß sich die Lötspitze 2 exakt zur Lotwelle 14 führen, eintauchen und wieder entnehmen läßt. Dazu befindet sich für die zu reinigende und mit frischem Lot 21 zu versehende Lötspitze 2 ein Einsteck- und Führungskanal 25 in dem Einführteil 23 und ist mit seiner Achse 26 so gerichtet, daß die Lötspitze 2 beim Einführen sicher und zuverlässig auf die Lotwelle 14 trifft. Sie taucht dabei nicht zu tief und nicht zu wenig in die Lotwelle 14 ein.

Ferner ist ein Anschlag 27 vorgesehen, mit dessen Hilfe mittelbar oder unmittelbar dafür gesorgt wird, daß eine exakte Eintauchtiefe für die Lötspitze 2 jeweils zweifelsfrei und mühelos erreicht wird. Ferner kann der Anschlag 27 dafür sorgen, daß zum Beispiel ein Handlötgerät 3 im eingetauchten Zustand nicht ständig von Hand gehalten werden muß.

Der Anschlag 27 dient zugleich als Distanzhalter.

Schließlich ist der Einsteck- bzw. Führungskanal 25 gemäß dem in Fig. 1 dargestellten Ausführungsbeispiel aus Zweckmäßigkeitsgründen schräg von oben nach unten gerichtet, so daß auch die Lötspitze 2 bis zum Erreichen der Lötwelle 14 entsprechend schräg von oben nach unten bewegt wird.

Eine Sichtscheibe 29 zum Beispiel in der Abdeckung 6 des Gehäuses 4 gestattet eine Beobachtung der freien Oberfläche 19 der Lotfüllung 8. Eine weitere, in den Figuren nicht dargestellte Sichtscheibe kann derart vorgesehen sein, daß sich auch die Lötspitze 2 beobachten läßt, wenn sie in die Lotwelle 14 eingeführt wird bzw. sich dort befindet.

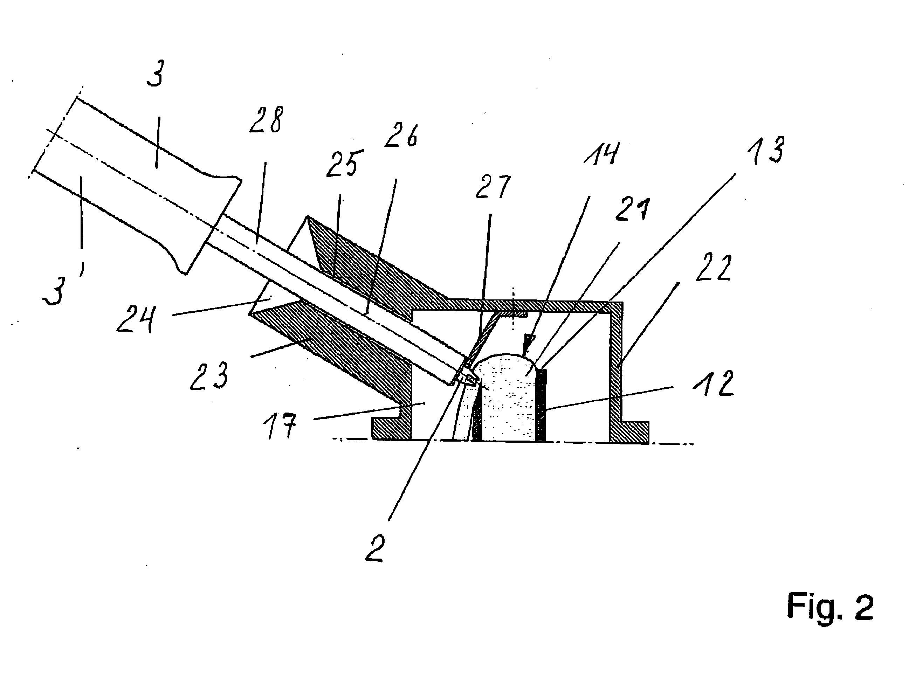

Die Lötspitze 2 ist vorzugsweise eine Kapillarspitze, wie deutlich aus den Fig. 2 bis 5 hervorgeht.

Die Lötspitze 2 befindet sich gemäß Ausführungsbeispiel am freien Ende eines stabförmigen Körpers 28, der die Lötspitze 2 mit dem Lötgerät in Gestalt eines Handlötgerätes 3 bzw. eines Handlingsgerätes 3' oder Roboters verbindet.

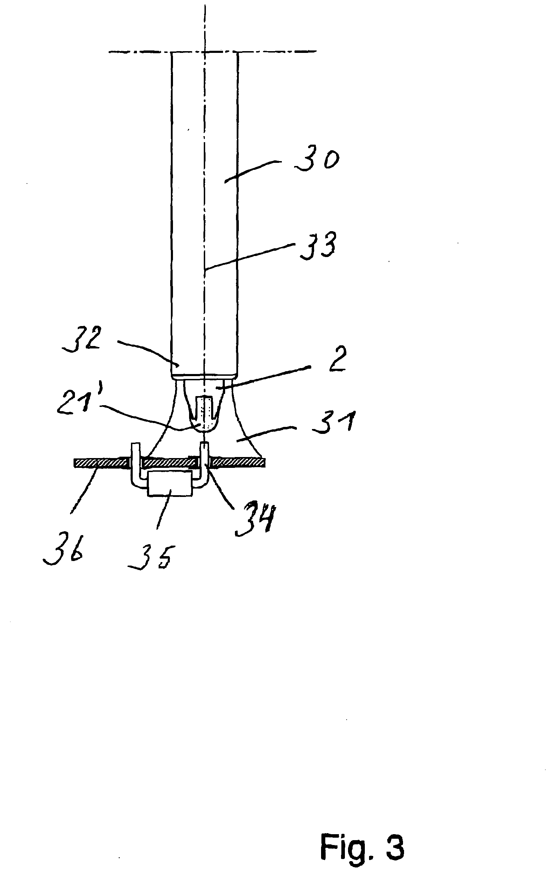

Gemäß den Darstellungen in den Fig. 3 bis 5 dient der stabförmige Körper 30 nicht nur als Träger für die Lötspitze 2, sondern auch zur Führung und Lenkung von Schutzgas 31. Ausströmöffnungen für das Schutzgas 31 sind trägerseitig, das heißt am freien Ende 32 des stabförmigen Körpers 30 rund um die Lötspitze 2 derart angeordnet, daß das Schutzgas 31 in Richtung der Körperachse 33 ausströmen kann. Dieses Schutzgas 31 kann je nach Bedarf heiß oder kühl sein.

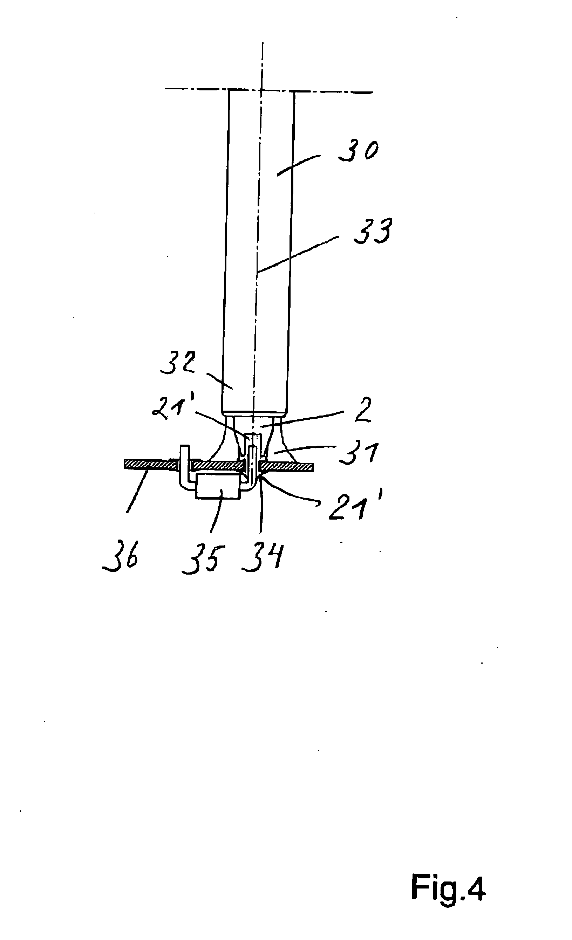

Gemäß der Darstellung in Fig. 3 dient heißes Schutzgas 31 zum Schutz und zum Erhalt der Temperatur des an der Lötspitze 2 befindlichen heißen und daher flüssigen Lotes 21'. Ferner dient das heiße Schutzgas 31 zum Vorwärmen der Lötstelle 34, an der gemäß dem in Fig. 2 darsteüten Ausführungsbeispiel ein Bauteil 35 in grundsätzlich bekannter Weise in den Öffnungen einer Leiterplatte 36 eingelötet werden soll. Gemäß der Darstellung in Fig. 4 erfolgt die Obergabe des flüssigen Lotes 21' an die lötstelle 34 bzw. das Elnlöten des Bauteiles 35 in die Leiterplatte 36 derart, daß zunächst noch heißes Schutzgas 31 verwendet wird.

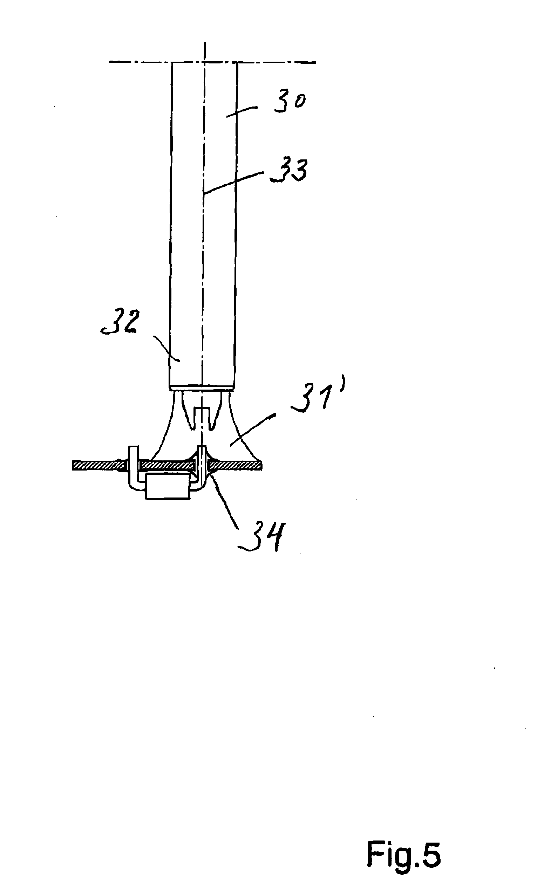

Sobald der Einlötvorgang grundsätzlich fertiggestellt ist, wird für eine Abkühlphase gemäß Fig. 5 anstelle des heißen Schutzgases 31 nunmehr kühlendes Schutzgas 31' auf die Lötstelle 34 gerichtet, so daß sich die Lötstelle 34 in einer kontrollierten Art und Weise abkühlen läßt.

Es versteht sich schließlich, daß die Erfindung nicht auf das konkret in den Fig. dargestellte bzw. beschriebene Ausführungsbeispiel beschränkt ist und daß noch mannigfache Abwandlungen im Rahmen des Erfindungsgedankens möglich sind. Dies gilt insbesondere für die Einzelmerkmale. So muß zum Beispiel der Anschlag 27 nicht zwingend die Lötspitze 2 mit einem freien Ende halten und die Lötspitze 2 gabelförmig umgreifen, wie dies in Fig. 2 dargestellt Ist. Anschläge 27 können auch auf andere Art direkt oder indirekt eine exakte Positionierung der Lötspitze 2 in der Beschichtungs - bzw. Füllposition bewirken.

Auch Ist es möglich, eine Vorrichtung 1 mit mehreren oder einer entsprechend angepaßten Lotwelle 14 und mit mehreren Gehäuseöffnungen für mehrere Reinigungs- und Beschichtungs- bzw. Befüllzonen vorzusehen.

## Patentansprüche

1. Verfahren zum Reinigen und zum Beschichten und/oder Befüllen einer an einem Lötgerät befindlichen Lötspitze (2) mit frischem, verarbeitbarem Lot (21), **dadurch gekennzeichnet,**
**daß** die Lötspitze (2) in eine heiße, fließende Lotwelle (14) getaucht und zum Löten wieder entnommen wird.

2. Verfahren nach Anspruch 1, **dadurch gekennzeichnet,**
**daß** die Lötspitze (2) bis zum Erreichen der Reinigungs- und Beschichtungszone an der Lotwelle (14) mittelbar oder unmittelbar geführt wird.

3. Verfahren nach Anspruch 1, **dadurch gekennzeichnet,**
**daß** die Lötspitze (2) in die Lotweiie (14) eingetaucht wird, bis sie direkt oder Indirekt einen Anschlag (27) erreicht.

4. Verfahren nach Anspruch 1, **dadurch gekennzeichnet,**
**daß** die Lötspitze (2) direkt oder indirekt bis zu dem in die Lotwelle (14) eingetauchten Zustand geführt und sodann gehalten wird.

5. Verfahren nach Anspruch 1, **dadurch gekennzeichnet,**
**daß** die Lötspitze (2) bis zum Erreichen der Lötwelle (14) schräg von oben nach unten bewegt wird.

6. Verfahren zum Reinigen und zum Beschichten und / oder zum Befüllen einer Lötspitze (2) mit frischem, flüssigem Lot (21), **dadurch gekennzeichnet,**
**daß** eine heiße, fließende Lötwelle (14) zum Reinigen und zum Beschichten und / oder Befüllen mit frischem, flüssigem Lot (21) von mindestens einer Lötspitze (2) verwendet wird.

7. Verfahren nach Anspruch 1 bis 6, **dadurch gekennzeichnet,**
**daß** als Lötspitze (2) eine Kapillarspitze verwendet wird.

8. Verfahren nach Anspruch 1 bis 7, **dadurch gekennzeichnet,**
**daß** als Träger für die Lötspitze (2) ein Handlötgerät (3) verwendet wird.

9. Verfahren nach Anspruch 1 bis 7,**dadurch gekennzeichnet,**
**daß** als Träger für die Lötspitze (2) ein Handlingsgerät (3') bzw. ein Roboter verwendet wird.

10. Verfahren nach Anspruch 1 bis 7, **dadurch gekennzeichnet,**
**daß** als Lötspitze (2) eine an den jeweiligen Verwendungszweck angepaßte Kapillarspitze verwendet wird.

11. Vorrichtung zum Reinigen und Beschichten und / oder Befüllen von mindestens einer an einem Lötgerät befindlichen lötspitze (2) mit frischem, heißem sowie flüssigem Lot, **gekennzeichnet durch** ein geschlossenes Gehäuse (4) mit mindestens einer Gehäuseöffnung (24) und einem mindestens einer Lotweile (14) aufweisenden Lotbad (8') unter einer Schutzgasatmosphäre (17), wobei die Lötspitze (2) **durch** die Gehäuseöffnung (24) bis in die Lotwelle (14) und zurück bewegbar ist.

12. Vorrichtung nach Anspruch 11, **dadurch gekennzeichnet,**
**daß** die Gehäuseöffnung (24) ein Einführteil (23) für die Lötspitze (2) umfaßt.

13. Vorrichtung nach Anspruch 11, **dadurch gekennzeichnet,**
**daß** das Einführteil (23) in einer über eine Lotbad-Abdeckung (6) ragenden Haube (22) angeordnet ist und mit mindestens einem Einsteck- und Führungskanal (25) versehen ist.

14. Vorrichtung nach Anspruch 11, **dadurch gekennzeichnet,**
**daß** mindestens ein Sichtglas (30) über dem Lotbad (8') vorgesehen ist.

15. Vorrichtung nach Anspruch 11, **dadurch gekennzeichnet,**
**daß** das Gehäuse 4 ein Gehäuseunterteit 5 und eine Lotbad-Abdeckung (6) umfaßt und daß ein Heizkörper (9) und eine Lotpumpe (11) sowie ein Pumpenmotor (15) und ein Lotkanal (10) vorgesehen sind, wobei der Lotkanal (10) zu einem vertikalen Steigrohr (12) mit einer freien Öffnung (13) führt.

16. Vorrichtung nach Anspruch 11, **dadurch gekennzeichnet,**
**daß** Ausströmöffnungen für Schutzgas (31, 31') trägerseitig die Lötspitze (2) umgeben.

17. Vorrichtung nach Anspruch 16, **dadurch gekennzeichnet,**
**daß** Maßnahmen zum jeweils bedarfsgerechtem Versorgen der Lütspitze (2) mit heißem Schutzgas (31) für eine Vorwärmung der Lötstelle (34) und mit kaltem Schutzgas (31') für eine Abkühlung der Lötstelle (34) vorgesehen sind.

18. Vorrichtung nach Anspruch 13, **dadurch gekennzeichnet**,
das die Haube (22) als Einsatz an der Lotbad-Abdeckung 6 des Gehäuses (4) angeordnet Ist.

19. Vorrichtung nach Anspruch 13, **dadurch gekennzeichnet,**
**daß** das die Gehäuseöffnung (24) aufweisende Einführteil (23) schräg von oben nach unten zur Lötwelle (14) gerichtet ist.

20. Vorrichtung nach Anspruch 11, **dadurch gekennzeichnet,**
**daß** mindestens ein Anschlag (27) für die Lötspitze (2) der Lotwelle (14) direkt oder indirekt zugeordnet ist.

21. Vorrichtung nach Anspruch 11, **dadurch gekennzeichnet,**
**daß** als Träger für die Lötspitze (2) ein Handlötgerät (3) vorgesehen ist.

22. Vorrichtung nach Anspruch 11, **dadurch gekennzeichnet,**
**daß** als Träger für die Lötspitze (2) ein Handlingsgerät (3) bzw. ein Roboter vorgesehen ist.
